# EUROPÄISCHE PATENTANMELDUNG

(11) **EP 2 774 673 A1**
(43) Veröffentlichungstag der Anmeldung: **10.09.2014**
(21) Anmeldenummer: 13001090.3
(22) Anmeldetag: 04.03.2013
(51) Int. Cl.: B01J 31/04, B01J 31/12, C09D 183/04, C09J 183/12, C08L 83/04

(54) **Katalysator für die Vernetzung von Siliconkautschukmassen**

(71) Anmelder: Nitrochemie Aschau GmbH, 84544 Aschau am Inn (DE)
(72) Erfinder: Pichl, Ulrich, 84544 Aschau (DE); Schmidt, Gerhard, 84456 Mühldorf a. Inn (DE); Ederer, Theodor, 84539 Zangberg (DE); Knott, Thomas, 84453 Mühldorf (DE); Bart, Karl-Christian, 84539 Ampfing (DE); Lippstreu, Jörg, 81679 München (DE)
(74) Vertreter: Lieck, Hans-Peter

(57) **Zusammenfassung**

Die vorliegende Erfindung betrifft einen Katalysator für die Vernetzung von Siliconkautschukmassen, eine Zusammensetzung zur Herstellung einer Siliconkautschukmasse, wobei die Zusammensetzung den erfindungsgemäßen Katalysator umfasst, eine Verwendung des erfindungsgemäßen Katalysators zum Vernetzen einer Siliconkautschukmasse, sowie eine Verwendung der erfindungsgemäßen Zusammensetzung zur Herstellung einer Siliconkautschukmasse, insbesondere zur Verwendung als Dichtungsmittel, Klebstoff oder Beschichtungsmittel.

## Beschreibung

Die vorliegende Erfindung betrifft einen Katalysator für die Vernetzung von Siliconkautschukmassen, eine Zusammensetzung zur Herstellung einer Siliconkautschukmasse, wobei die Zusammensetzung den erfindungsgemäßen Katalysator umfasst, eine Verwendung des erfindungsgemäßen Katalysators zum Vernetzen einer Siliconkautschukmasse, sowie eine Verwendung der erfindungsgemäßen Zusammensetzung zur Herstellung einer Siliconkautschukmasse, insbesondere zur Verwendung als Dichtungsmittel, Klebstoff oder Beschichtungsmittel.

### Hintergrund der Erfindung

Kalthärtende Siliconkautschukmassen, auch RTV-(Raumtemperaturvernetzende)-Siliconkautschukmassen genannt, sind schon lange als maßgeschneiderte Werkstoffe mit elastischen Eigenschaften bekannt. Sie werden allgemein als Dichtungsmassen oder Klebstoffe für Glas, Porzellan, Keramik, Stein, Kunststoffe, Metalle, Holz usw. eingesetzt, z.B. als Fugen- oder Dichtungsmassen im Bauwesen und im Sanitärbereich, oder als Beschichtungsmaterialien, z.B. in der Elektronikindustrie, (Römpp Chemie Lexikon, CD ROM, Version 2.0, Hrsg. J. Falbe, Thieme-Verlag, Stuttgart 1999 sowie Ullmanns Enzyklopädie der Technischen Chemie, 4. Auflage, Hrsg. E. Bartholome, Verlag Chemie, Weinheim 1982, Band 21, S. 511 ff.). Insbesondere werden Einkomponenten-RTV-Siliconkautschukmassen (RTV-1) eingesetzt; dabei handelt es sich beispielsweise um plastisch formbare Mischungen aus α,ω-Dihydroxypolyorganosiloxanen und geeigneten Vernetzern (die im Fachgebiet auch als Vernetzungsmittel oder Härter bezeichnet werden), die unter Feuchtigkeitsausschluß (z.B. in einer geeigneten Kartusche) aufbewahrt werden können, aber unter dem Einfluß von Wasser oder Luftfeuchtigkeit bei Raumtemperatur polymerisieren. Die Polymerisation erfolgt in der Regel durch die Kondensation von SiOH-Gruppen mit geeigneten hydrolysierbaren SiX-Gruppen der Vernetzer.

In Abhängigkeit von den gewünschten chemischen und physikalischen Eigenschaften des Polymerisationsproduktes, wie z.B. dem gewünschten Vernetzungsgrad, der Lösemittelresistenz usw., werden in der Regel verschiedene polyfunktionelle, z.B. tri- und/oder tetrafunktionelle, Vernetzer (Härter) zusammen mit verschiedenen difunktionellen oder mehrere funktionelle Gruppen tragenden Polyorganosiloxanverbindungen eingesetzt. Dabei werden besonders häufig α,ω-Dihydroxypolyorganosiloxane als difunktionelle Polyorganosiloxanverbindungen eingesetzt.

RTV-1-Siliconkautschukmassen werden anhand der bei der Hydrolyse des Vernetzers freigesetzten Austrittsgruppen (HX) in saure (HX = Säuren, wie z.B. Essigsäure, etc.), basische (z.B. HX = Amine, etc.) und neutrale (z.B. HX = Alkohole, Oxime, etc.) Systeme eingeteilt. Zur Zeit erhältliche RTV-1-Siliconkautschukmassen enthalten in der Regel sauer vernetzende Systeme, die unter Abgabe von Essigsäure hydrolysieren, oder neutral vernetzende Systeme, die unter Abgabe von Oximverbindungen, wie beispielsweise Butan-2-onoxim (bzw. Methyl-Ethyl-Ketoxim, MEKO), hydrolysieren.

Für den gewünschten breiten Anwendungsbereich der Siliconkautschukmassen sollten diese auf möglichst vielen Oberflächen haften, wie beispielsweise auf Holz, lackiertem Holz, lasiertem Holz, Metallen, wie Stahl, Aluminium, pulverbeschichtetem Aluminium, Glas, Kunststoffen, wie Polyvinylchlorid (PVC), Polyamid, Beton, etc. Darüber hinaus sollten die Siliconkautschukmassen in einer üblichen Kartusche lagerbeständig sein, d.h. ihre Eigenschaften sollten sich nicht in Abhängigkeit von der Aufbewahrungszeit ändern, und das möglichst sowohl in einer nach der Befüllung abgeschlossenen Kartusche, als auch in einer bereits geöffneten und/oder teilweise entleerten Kartusche. Schließlich sollte das Polymerisationsprodukt nach abgeschlossener Vernetzung (Härtung) der Siliconkautschukmasse transparent bzw. klar sein.

Neben der geeigneten Auswahl der eigentlichen Polymerkomponenten, wie Vernetzer und Polyorganosiloxan, werden zur Kontrolle von Polymerisationsgeschwindigkeit und/oder Polymerisationsgrad in der Regel ein Katalysator beigefügt, durch den wichtige Produkteigenschaften der Siliconkautschukmassen beeinflusst werden, wie z.B. die Hautbildungszeit (d.h. die Zeit, in der sich auf einer ausgebrachten Masse eine erste vollständige Haut bildet), die Klebfreizeit (d.h. die Zeit, nach der die Masse keine Klebrigkeit mehr aufweist), die Durchhärtung (d.h. die Zeit, in der die Polymerisation abgeschlossen ist), usw. Beispielsweise werden als Eigenschaften für gewerbliche Silicondichtstoffe eine Hautbildungszeit von 5 bis 15 Minuten, eine Klebfreizeit von 15 bis 120 Minuten und eine Durchhärtung von maximal 7 Tagen bei einer Applikation mit einer Höhe von 10 mm gefordert. Weitere Informationen zu Hautbildungszeit, Klebfreizeit und Durchhärtung können beispielsweise dem "Praxishandbuch Dichtstoffe" (3. Auflage 1990) entnommen werden, das vom Industrieverband Dichtstoffe e.V. (IVD) herausgegeben wurde.

Als Katalysator für Siliconkautschukmassen wurde bisher ein metallorganischer Katalysator verwendet, wie er üblicherweise für kondensationsvernetzende Polysiloxane eingesetzt wird, insbesondere ein Katalysator auf Basis einer zinnorganischen Verbindung, wie beispielsweise einem Alkyl-zinn-carboxylat, insbesondere Dibutylzinndilaurat und Dioctyl-zinn-dilaurat. Derartige zinnorganische Verbindungen weisen jedoch toxikologische Eigenschaften auf, die zur Einschränkung ihrer Verwendung in kommerziell erhältlichen Produkten geführt hat (s. EU-Richtlinie 76/769/EWG vom 28.05.2009).

Ersatzweise wurde im Stand der Technik bisher ein anderer Katalysator, der keine zinnorganische Verbindung umfasst, für die Vernetzung von Polysiloxanen verwendet.

Beispielsweise kann eine Titan-basierte Verbindungen als Katalysator verwendet werden, wie z.B. in EP 1 230 298 A1 und EP 2 290 007 A1 beschrieben wird. Allerdings ist bekannt, dass ein Katalysator auf Basis einer Titanverbindung zu Gelbfärbungen und/oder Oberflächenklebrigkeit in den Produkten führen kann, sowie eine langsame Vulkanisationsgeschwindigkeit, eine mangelnde Lagerungsstabilität und eine Unverträglichkeit mit gängigen Haftvermittlern auf Aminosilanbasis aufweist.

Weiterhin beschreibt EP 1 230 298 A1 einen Katalysator auf Basis von Aminen und Metallsalzen von Zinn, Zink, Eisen, Blei, Barium und Zirkonium sowie auf Basis von Chelaten von Zinn. Dieser Katalysator führt zu Produkten mit einer geringen Gelbfärbung, ist jedoch laut EP 2 290 007 A1 ein langsamer Katalysator.

Deshalb schlägt EP 2 290 007 A1 einen Katalysator auf Basis von Metallverbindungen der I. und II. Haupt- und Nebengruppen, d.h. Li, Na, K, Rb, Cs, Be, Mg, Ca, Sr, Ba, Cu, Ag, Au, Zn, Cd und Hg, in Form von reinen Carboxylaten vor, die bei Zugabe eines sauren Co-Katalysators in Form einer organischen oder anorganischen Säure ein Produkt mit akzeptablen Härtungsverlauf ergeben. EP 2 290 007 A1 beschreibt die Verwendung dieses Katalysators in Siliconkautschukmassen mit Vernetzern (Härtern) die bei der Hydrolyse saure (Essigsäure) bzw. neutrale (Alkohole bzw. MEKO) Verbindungen abgeben, insbesondere unter Verwendung eines Katalysators aus einem Li- Carboxylat bzw. aus einem Sr-Carboxylat.

Die Verwendung eines Katalysators auf Basis von Li-, Na-, K-, Mg-, Ca-, Sr-Verbindungen ohne zusätzliche gleichzeitige Verwendung von einem sauren Co-Katalysator wird in EP 2 280 041 A1 beschrieben. Dort wird weiter beschrieben, dass insbesondere die Verwendung von Octasoligem Lithium oder Octosoligem Strontium in Kombination mit Alkoxy-, Acetoxy- oder Oximo-RTV-1 Produkte mit gewünschten Eigenschaften ergeben.

### Aufgabe der Erfindung

Die Erfinder der vorliegenden Erfindung haben allerdings gefunden, dass es nicht möglich ist, die oben beschriebenen bekannten Zinn-freien Katalysatoren in Verbindung mit bekannten Siliconkautschukmassen, die unter Verwendung von Katalysatoren auf Basis von Zinn-organischen Verbindungen optimiert worden sind, unter Erhalt der optimierten Produkteigenschaften der Siliconkautschukmassen zu verwenden. Ein bloßes Ersetzen eines Zinn-basierten Katalysators durch einen der bekannten Zinn-freien Katalysatoren ergibt kein Produkt (RTV-1) mit den gewünschten Eigenschaften. So wurde gefunden, dass die mit den bekannten Zinn-freien Katalysatoren hergestellten Dichtstoffmassen eine schlechte Haftung sowie eine ungenügende Lagerstabilität aufweisen. Insbesondere mit Acetat-Vernetzern wurde darüber hinaus eine mangelhafte Durchhärtung beobachtet.

Es ist deshalb eine Aufgabe der Erfindung, einen verbesserten Katalysator für Siliconkautschukmassen bereitzustellen, der nicht nur Zinn-frei ist, sondern auch alle für RTV-1 gewünschten Eigenschaften in Produktzusammensetzungen aufrechterhält, die unter Verwendung von Katalysatoren auf Basis von Zinnorganischen Verbindungen optimiert worden sind.

Die Aufgabe der Erfindung wird durch den Gegenstand der unabhängigen Ansprüche gelöst. Bevorzugte Ausführungsformen sind Gegenstand der abhängigen Ansprüche.

### Kurze Beschreibung der Erfindung

Zur Lösung der oben beschriebenen Aufgabe stellt die vorliegende Erfindung bereit: einen Katalysator für die Vernetzung von Siliconkautschukmassen, eine Zusammensetzung zur Herstellung einer Siliconkautschukmasse, wobei die Zusammensetzung den erfindungsgemäßen Katalysator umfasst, eine Verwendung des erfindungsgemäßen Katalysators zum Vernetzen einer Siliconkautschukmasse, sowie eine Verwendung der erfindungsgemäßen Zusammensetzung zur Herstellung einer Siliconkautschukmasse, insbesondere zur Verwendung als Dichtungsmittel, Klebstoff oder Beschichtungsmittel.

Durch ausführliche Studien haben die Erfinder der vorliegenden Erfindung überraschend gefunden, dass die Aufgabe der Erfindung gelöst werden kann, indem als Katalysator in einer Siliconkautschukmasse nicht eine Zinn-freie Einzelverbindung, sondern eine Mischung aus mindestens zwei Zinn-freien Verbindungen mit katalytischer Wirkung eingesetzt wird. Eine solche Mischung aus Einzelkatalysatoren wurde bisher nicht eingesetzt, bietet aber neben den toxikologischen Vorteilen, den zusätzlich Vorteil, dass sie leicht an bestehende Zusammensetzungen angepasst werden kann.

Insbesondere stellt die vorliegende Erfindung die folgenden Mittel bereit:
(1) Einen Katalysator für die Vernetzung von Siliconkautschukmassen, wobei der Katalysator mindestens zwei voneinander verschiedene Verbindungen umfasst, die unabhängig voneinander aus Metallsalzen von Carbonsäuren ausgewählt werden.
(2) Einen Katalysator, wie oben unter (1) beschrieben, der dadurch gekennzeichnet ist, dass ein Metallsalz einer Carbonsäuren mindestens ein Metallkation umfasst, das aus einem Kation von Bismut, einem Kation von Calcium, einem Kation von Kalium, einem Kation von Lithium, einem Kation von Magnesium, einem Kation von Natrium und einem Kation von Zink ausgewählt wird.
(3) Einen Katalysator, wie oben unter (1) oder (2) beschrieben, der dadurch gekennzeichnet ist, dass ein Metallsalz einer Carbonsäure ein oder mehrere Carbonsäureanionen umfasst, die aus Anionen von gesättigten und ungesättigten Carbonsäuren mit sechs bis neunzehn Kohlenstoffatomen ausgewählt werden, wobei die Carbonsäure eine geradkettige oder verzweigte Kohlenwasserstoffkette umfasst.
(4) Einen Katalysator, wie oben unter (1) bis (3) beschrieben, der dadurch gekennzeichnet ist, dass er ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst.
(5) Einen Katalysator, wie oben unter (1) bis (4) beschrieben, der dadurch gekennzeichnet ist, dass er Zink-bis(2-ethylhexanoat) umfasst.
(6) Einen Katalysator, wie oben unter (1) bis (5) beschrieben, der dadurch gekennzeichnet ist, dass er Bismut-tris(2-ethylhexanoat) umfasst.
(7) Einen Katalysator, wie oben unter (1) bis (6) beschrieben, der dadurch gekennzeichnet ist, dass er Calcium-bis(2-ethylhexanoat) umfasst.
(8) Einen Katalysator, wie oben unter (1) bis (7) beschrieben, der dadurch gekennzeichnet ist, dass er Calcium-bis(2-ethylhexanoat) und Zink-bis(2-ethylhexanoat) umfasst.
(9) Einen Katalysator, wie oben unter (8) beschrieben, der dadurch gekennzeichnet ist, dass er Calcium-bis(2-ethylhexanoat) und Zink-bis(2-ethylhexanoat) in einem Verhältnis von 1:1 bis 1:3 umfasst.
(10) Einen Katalysator, wie oben unter (1) bis (7) beschrieben, der dadurch gekennzeichnet ist, dass er Bismut-tris(2-ethylhexanoat) und Zink-bis(2-ethylhexanoat) umfasst.
(11) Einen Katalysator, wie oben unter (10) beschrieben, der dadurch gekennzeichnet ist, dass er Bismut-tris(2-ethylhexanoat) und Zink-bis(2-ethylhexanoat) in einem Verhältnis von 1:1 bis 4:1 umfasst.
(12) Eine Zusammensetzung, die den oben unter (1) bis (11) beschriebenen Katalysator, eine mindestens Organosiliconverbindung und mindestens einen Vernetzer umfasst.
(13) Eine Zusammensetzung wie oben unter (12) beschrieben, die dadurch gekennzeichnet ist, dass die Organosiliconverbindung eine α,ω-dihydroxyl-terminierte Polyorganosiloxanverbindung ist, insbesondere ein α,ω-dihydroxyl-terminiertes Polydialkylsiloxan.
(14) Eine Zusammensetzung wie oben unter (12) oder (13) beschrieben, die dadurch gekennzeichnet ist, dass der Vernetzer mindestens eine Verbindung umfasst, die aus der Gruppe ausgewählt wird, die aus Silanverbindungen, die Säurereste umfassen, insbesondere Silanverbindungen mit Acetatresten, und Silanverbindungen, die Oximreste umfassen, insbesondere Silanverbindungen mit Acetonoxim-Gruppen, Silanverbindungen mit Methyl-Ethyl-Ketoxim-Gruppen, Silanverbindungen mit Methyl-Propyl-Ketoxim-Gruppen, Silanverbindungen mit Methyl-Isobutyl-Ketoxim-Gruppen und/oder Silanverbindungen mit Methyl-Isopropyl-Ketoxim-Gruppen, besteht.
(15) Eine Zusammensetzung wie oben unter (14) beschrieben, die dadurch gekennzeichnet ist, dass der Vernetzer mindestens eine Silanverbindung mit Acetatresten und mindestens eine Silanverbindung mit Akoxyresten umfasst.
(16) Eine Zusammensetzung wie oben unter (12) bis (15) beschrieben, die dadurch gekennzeichnet ist, dass sie 40 bis 90 Gew.-% der Organosiliconverbindung, 1 bis 15 Gew.-% des Vernetzers, und 0,1 bis 5,0 Gew.-% des Katalysators, wie oben unter (1) bis (12) beschrieben, umfasst.
(17) Eine Verwendung eines oben unter (1) bis (11) beschriebenen Katalysators zum Vernetzen einer Siliconkautschukmasse.
(18) Eine Verwendung einer oben unter (12) bis (16) beschriebenen Zusammensetzung als Dichtungsmittel, Klebstoff oder Beschichtungsmittel.

### Detaillierte Beschreibung der Erfindung

Die vorliegende Erfindung stellt einen Katalysator für die Vernetzung von Siliconkautschukmassen bereit. Der erfindungsgemäße Katalysator umfasst mindestens zwei voneinander verschiedene Verbindungen, die unabhängig voneinander aus Metallsalzen von Carbonsäuren ausgewählt werden.

Der erfindungsgemäße Katalysator ist somit eine Mischung aus mindestens zwei voneinander verschiedenen Verbindungen, vorzugsweise aus zwei bis zwanzig voneinander verschiedenen Verbindungen, weiter bevorzugt aus zwei bis acht voneinander verschiedenen Verbindungen, und besonders bevorzugt aus zwei oder drei voneinander verschiedenen Verbindungen.

Jede einzelne dieser Verbindungen ist ein Metallsalz einer oder mehrerer Carbonsäuren.

Der Begriff "Carbonsäure" bezeichnet dabei eine organische Verbindung, vorzugsweise einen Kohlenwasserstoff, mit mindestens einer Carboxylgruppe -COOH. Bevorzugt umfasst eine Carbonsäure einen Kohlenwasserstoff, der von 1 bis 25 Kohlenstoffatome umfasst, vorzugsweise von 5 bis 20 Kohlenstoffatome, und besonders bevorzugt von 6 bis 19 Kohlenstoffatome. Der Kohlenwasserstoff der Carbonsäure kann gesättigt, ungesättigt oder aromatisch sein, oder entsprechende Bindungen umfassen. Der Kohlenwasserstoff der Carbonsäure kann eine geradkettige oder verzweigte Kohlenwasserstoffkette umfassen, und/oder Ringe aus Kohlenwasserstoffen und/oder geeigneten Heteroatomen. Bevorzugt umfasst die Carbonsäure einen gesättigten Kohlenwasserstoff (Alkan), der eine geradkettige oder verzweigte Kohlenwasserstoffkette umfasst. Die Carbonsäure kann eine oder mehrere Carboxylgruppen umfassen, vorzugsweise eine, zwei oder drei Carboxylgruppen. Besonders bevorzugt sind Monocarbonsäuren und Dicarbonsäure. In besonders bevorzugten Dicarbonsäuren sind die zwei Carboxylgruppen an benachbarte Kohlenstoffatome gebunden. Ganz besonders bevorzugt sind Monocarbonsäuren. Eine besonders bevorzugte Carbonsäure ist 2-Ethylhexansäure.

Ein "Metallsalz einer Carbonsäure" im Sinne dieser Erfindung ist eine Verbindung, die mindestens ein Carboxylatanion und mindestens ein Metallkation umfasst. Als Carboxilatanion wird dabei das Anion bezeichnet, das durch Deprotonierung einer Carboxylgruppe einer Carbonsäure gebildet wird. Somit ist ein Carboxylatanion im Sinne dieser Erfindung eine organische Verbindung, vorzugsweise ein Kohlenwasserstoff, mit mindestens einer Carboxylatgruppe -COO⁻, die aus jeder der oben beschriebenen Carbonsäuren gebildet werden kann. Das Metallkation ist ein Kation des jeweiligen Metalls, vorzugsweise in einer unter den Bedingungen der Anwendung stabilen Oxidationsstufe. Entsprechend weist das Metallkation vorzugsweise eine positive Ladung von +1 bis +4 auf, weiter bevorzugt von +1 oder +2 oder +3. Beispiele für ein einwertiges Metallkation sind K⁺, Li⁺ und Na⁺. Beispiele für ein zweiwertiges Metallkation (Ladung +2) sind Ca²⁺ , Mg²⁺ und Zn²⁺, und ein Beispiel für ein dreiwertiges Metallkation (Ladung +3) ist Bi³⁺. Für eine ladungsneutrale Verbindung kann die Ladung des Metallkations durch die Anzahl der einwertig negativ geladenen Carboxylatgruppen ausgeglichen werden, so dass das Verhältnis von Metallkation zu Carboxylatgruppe in dem Metallsalz je nach Ladung des Metallkations 1:1, 1:2, 1:3 usw., bis zur maximalen Ladung, betragen kann. Beispielsweise entspricht im Fall von Monocarbonsäuren das Verhältnis von Metall zu Carbonsäure bei einwertigen Metallkationen 1:1, bei zweiwertigen Metallkationen 1:2, bei dreiwertigen Metallkationen 1:3, usw. Bei Dicarbonsäuren mit zwei Carboxylatgruppen wird das Verhältnis entsprechend angepasst, so dass beispielsweise bei zweiwertigen Metallkationen das Verhältnis von Metall zu Dicarboxylat 1:1 betragen kann, usw. Das Metallsalz kann Carboxylatanionen einer einzigen Carbonsäure enthalten, oder Carboxylatanionen mehrerer voneinander verschiedener Carbonsäuren. Beispielsweise kann das Matallsalz eines zweiwertigen Metallkations ein Carboxylatanion einer ersten Carbonsäure (R¹-COO⁻) und ein Carboxylatanion einer davon verschiedenen zweiten Carbonsäure (R²-COO⁻) enthalten. Neben Metallkation und Carboxylatanion(en) kann das Metallsalz einer Carbonsäure auch weitere Bestandteile umfassen, wie beispielsweise andere Anionen, die keine Carboxylatanionen sind, z.B. Halogenidanionen, Nitratanionen, Sulfatanionen oder dergleichen, oder neutrale Moleküle, z.B. Solvatmoleküle, oder dergleichen.

Erfindungsgemäß umfasst der Katalysator für die Vernetzung von Siliconkautschukmassen mindestens zwei voneinander verschiedene Verbindungen, die unabhängig voneinander ausgewählt aus Metallsalzen von Carbonsäuren werden. Somit kann der erfindungsgemäße Katalysator Salze von zwei oder mehreren voneinander verschiedenen Metallen und/oder zwei oder mehreren voneinander unterschiedlichen Carbonsäuren umfassen. Bevorzugt umfasst der erfindungsgemäße Katalysator Salze von mindestens zwei voneinander verschiedenen Metallen.

Es wurde überraschend gefunden, dass ein Katalysator für die Vernetzung von Siliconkautschukmassen, der mindestens zwei voneinander verschiedene Metallsalze von Carbonsäuren gemäß der zuvor gegebenen Definition umfasst, bei der Herstellung von Siliconkautschukmassen, insbesondere von RTV-1 Siliconkautschukmassen, besonders vorteilhafte Produkteigenschaften bedingt. Der erfindungsgemäße Katalysator kann vorteilhaft verwendet werden, ohne dass ein Co-Katalysator benötigt wird.

Besonders bevorzugt umfasst der erfindungsgemäße Katalysator ein Metallsalz einer Carbonsäuren mindestens ein Metallkation, das aus einem Kation von Bismut, einem Kation von Calcium, einem Kation von Kalium, einem Kation von Lithium, einem Kation von Magnesium, einem Kation von Natrium und einem Kation von Zink ausgewählt wird.

Es wurde gefunden, dass Mischungen, die ein Bi-, Ca-, K-, Li-, Mg, Na-, und/oder Zn-Kation umfassen, Produkte mit besonders vorteilhaften Eigenschaften bereitstellen. Weiter bevorzugt sind Mischungen von Carbonsäuresalzen, die ein Bi-, Ca-, K-, Li-, Mg, Na-, und/oder Zn-Kation umfassen, und besonders bevorzugt Mischungen, die ein Bi-, Ca-, und/oder Zn-Kation umfassen.

Besonders bevorzugt umfasst der erfindungsgemäße Katalysator ein Metallsalz einer Carbonsäure, das ein oder mehrere Carbonsäureanionen umfasst, die aus Anionen von gesättigten und ungesättigten Carbonsäuren mit sechs bis neunzehn Kohlenstoffatomen ausgewählt werden, wobei die Carbonsäure vorzugsweise eine geradkettige oder verzweigte Kohlenwasserstoffkette umfasst.

Es wurde gefunden, dass so Produkte mit besonders vorteilhaften Eigenschaften bereitgestellt werden können. Weiter bevorzugt sind Anionen von gesättigten und ungesättigten Carbonsäuren mit sechs bis zehn Kohlenstoffatomen. Weiter bevorzugt sind Anionen von gesättigten Carbonsäuren mit einer verzweigten Kohlenwasserstoffkette. Besonders bevorzugt sind Anionen einer Carbonsäure mit einer verzweigten Kohlenwasserstoffkette aus acht Kohlenstoffatomen. Eine besonders bevorzugte Ausführungsform einer Carbonsäure ist 2-Ethyl-Hexansäure.

Besonders bevorzugt umfasst der erfindungsgemäße Katalysator ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst.

Es wurde gefunden, dass so Produkte mit besonders vorteilhaften Eigenschaften bereitgestellt werden können.

Weiter bevorzugt umfasst der erfindungsgemäße Katalysator ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz und einem Calciumsalz jeweils einer oder mehrerer verzweigten gesättigten Carbonsäuren mit sechs bis neunzehn Kohlenstoffatomen ausgewählt wird, umfasst. Besonders bevorzugt umfasst der erfindungsgemäße Katalysator ein Zinksalz einer verzweigten Carbonsäure mit sechs bis zehn Kohlenstoffatomen in Kombination mit einem Bismutsalz einer verzweigten Carbonsäure mit sechs bis zehn Kohlenstoffatomen und/oder einem Calciumsalz einer verzweigten Carbonsäure mit sechs bis zehn Kohlenstoffatomen. In einer besonders bevorzugten Ausführungsform umfasst der erfindungsgemäße Katalysator ein Zinksalz einer verzweigten Carbonsäure mit acht Kohlenstoffatomen in Kombination mit einem Bismutsalz einer verzweigten Carbonsäure mit acht Kohlenstoffatomen und/oder einem Calciumsalz einer verzweigten Carbonsäure mit acht Kohlenstoffatomen.

Besonders bevorzugt umfasst der erfindungsgemäße Katalysator Zink-bis(2-ethylhexanoat).

Es wurde gefunden, dass mit Zink-bis(2-ethylhexanoat) Produkte mit besonders vorteilhaften Eigenschaften bereitgestellt werden können.

Besonders bevorzugt umfasst der erfindungsgemäße Katalysator Bismut-tris(2-ethylhexanoat).

Es wurde gefunden, dass mit Bismut-tris(2-ethylhexanoat) Produkte mit besonders vorteilhaften Eigenschaften bereitgestellt werden können.

Besonders bevorzugt umfasst der erfindungsgemäße Katalysator Calcium-bis(2-ethylhexanoat).

Es wurde gefunden, dass mit Calcium-bis(2-ethylhexanoat)Produkte mit besonders vorteilhaften Eigenschaften bereitgestellt werden können.

Besonders bevorzugt umfasst der erfindungsgemäße Katalysator eine Mischung aus Calcium-bis(2-ethylhexanoat) und Zink-bis(2-ethylhexanoat). Besonders bevorzugt wird ein erfindungsgemäßer Katalysator, der Calcium-bis(2-ethylhexanoat) und Zink-bis(2-ethylhexanoat) umfasst, zusammen mit einem Oximvernetzer verwendet.

Besonders bevorzugt umfasst der erfindungsgemäße Katalysator eine Mischung aus Calcium-bis(2-ethylhexanoat) und Zink-bis(2-ethylhexanoat) in einem Verhältnis von 1:1 bis 1:3 (Gewichtsverhältnis), weiter bevorzugt in einem Verhältnis von 1:1 bis 1:2, und besonders bevorzugt 4:5.

Es wurde gefunden, dass mit einem Katalysator, der Calcium-bis(2-ethylhexanoat) und Zink-bis(2-ethylhexanoat), vorzugsweise im Verhältnis von 1:1 bis 1:3, umfasst, Produkte mit besonders vorteilhaften Eigenschaften bereitgestellt werden können.

Besonders bevorzugt umfasst der erfindungsgemäße Katalysator eine Mischung aus Bismut-tris(2-ethylhexanoat) und Zink-bis(2-ethylhexanoat). Besonders bevorzugt wird ein erfindungsgemäßer Katalysator, der Bismut-tris(2-ethylhexanoat) und Zink-bis(2-ethylhexanoat) umfasst, zusammen mit einem Acetatvernetzer verwendet.

Besonders bevorzugt umfasst der erfindungsgemäße Katalysator eine Mischung aus Bismut-tris(2-ethylhexanoat) und Zink-bis(2-ethylhexanoat) in einem Verhältnis von 1:1 bis 4:1 (Gewichtsverhältnis), weiter bevorzugt in einem Verhältnis von 2:1 bis 3:1, und besonders bevorzugt von 7:3.

Es wurde gefunden, dass mit einem Katalysator, der Bismut-tris(2-ethylhexanoat) und Zink-bis(2-ethylhexanoat), vorzugsweise im Verhältnis von 1:1 bis 4:1, umfasst, Produkte mit besonders vorteilhaften Eigenschaften bereitgestellt werden können.

In einem weiteren Aspekt stellt die vorliegende Erfindung eine Zusammensetzung bereit, die den erfindungsgemäßen Katalysator, mindestens eine Organosiliconverbindung und mindestens einen Vernetzer (Härter) umfasst.

Eine erfindungsgemäße Zusammensetzung umfasst zumindest eine Organosiliconverbindung, vorzugsweise zwei, drei oder mehrere verschiedene Organosiliconverbindungen. Eine in der Zusammensetzung enthaltene Organosiliconverbindung ist bevorzugt eine oligomere oder polymere Verbindung. Die polymere Organosiliconverbindung ist vorzugsweise eine difunktionelle Polyorganosiloxanverbindung, besonders bevorzugt ein α,ω-dihydroxyl-terminiertes Polyorganosiloxan. Ganz besonders bevorzugt sind α,ω-dihydroxyl-terminierte Polydiorganosiloxane, insbesondere α,ω-dihydroxyl-terminierte Polydialkylsiloxane, α,ω-dihydroxyl-terminierte Polydialkenylsiloxane oder α,ω-dihydroxyl-terminierte Polydiarylsiloxane. Neben homopolymeren α,ω-dihydroxyl-terminierten Polydiorganosiloxanen können auch heteropolymere α,ω-dihydroxyl-terminierte Polydiorganosiloxane mit unterschiedlichen organischen Substituenten verwendet werden, wobei sowohl Copolymere aus Monomeren mit gleichartigen organischen Substituenten an einem Siliciumatom, als auch Copolymere aus Monomeren mit verschiedenen organischen Substituenten an einem Siliciumatom umfaßt sind, z.B. solche mit gemischten Alkyl-, Alkenyl- und/oder Arylsubstituenten. Die bevorzugten organischen Substituenten umfassen geradkettige und verzweigte Alkylgruppen mit 1 bis 8 Kohlenstoffatomen, insbesondere Methyl, Ethyl, n- und iso-Propyl, und n-, sec- und tert-Butyl, Vinyl und Phenyl. Dabei können in den einzelnen organischen Substituenten einzelne oder alle kohlenstoffgebundenen Wasserstoffatome durch übliche Substituenten, wie Halogenatome oder funktionelle Gruppen wie Hydroxyl- und/oder Aminogruppen, substituiert sein. So können α,ω-dihydroxyl-terminierte Polydiorganosiloxane mit teilfluorierten oder perfluorierten organischen Substituenten verwendet werden oder α,ω-dihydroxyl-terminierte Polydiorganosiloxane mit durch Hydroxyl- und/oder Aminogruppensubstituierten organischen Substituenten an den Siliciumatomen.

Besonders bevorzugte Beispiele für eine Organosiliconverbindung sind α,ω-dihydroxyl-terminierte Polydialkylsiloxane, wie z.B. α,ω-dihydroxyl-terminierte Polydimethylsiloxane, α,ω-dihydroxyl-terminierte Polydiethylsiloxane oder α,ω-dihydroxyl-terminierte Polydivinylsiloxane, sowie α,ω-dihydroxyl-terminierte Polydiarylsiloxane, wie z.B. α,ω-dihydroxyl-terminierte Polydiphenylsiloxane. Dabei sind Polyorganosiloxane bevorzugt, die eine kinematische Viskosität von 5.000 bis 120.000 cSt (bei 25°C) haben, insbesondere solche mit einer Viskosität von 20.000 bis 100.000 cSt, und besonders bevorzugt solche mit einer Viskosität von 40.000 bis 90.000 cSt.

Es können auch Mischungen aus Polydiorganosiloxanen mit unterschiedlichen Viskositäten verwendet werden.

Eine erfindungsgemäße Zusammensetzung umfasst mindestens einen Vernetzer. Dabei kann jeder bekannte Vernetzer verwendet werden. Bevorzugt sind Vernetzer auf Basis von Silanverbindungen mit hydrolysierbaren Acetatresten und/oder Vernetzer auf Basis von Silanverbindungen mit hydrolysierbaren Oximresten. Neben den hydrolisierbaren Acetat- und/oder Oximgruppen können die Vernetzer nicht-hydrolisierbare Reste umfassen, wie beispielsweise Alkylgruppen, Alkenylgruppen, Alkinylgruppen, Arylgruppen, und dergleichen. Bevorzugte nicht-hydrolisierbare Reste sind Methyl, Ethyl, Propyl, Isopropyl, Isobutyl, Vinyl, Phenyl und dergleichen. Die als Vernetzer verwendete Silanverbindung hat vorzugsweise die allgemeine Formel SiXₙY₍₄₋ₙ₎, wobei mit X die hydrolisierbaren Reste und mit Y die nichthydrolisierbaren Reste bezeichnet sind, und n eine ganze Zahl von 1 bis 4 ist. Bevorzugt umfasst ein Vernetzer drei (n = 3) oder vier (n = 4) hydrolisierbare Gruppen.

Bevorzugt wird der Vernetzer ausgewählt aus Silanverbindungen, die Säurereste umfassen, insbesondere Silanverbindungen mit Acetatresten, und Silanverbindungen, die Oximreste umfassen, insbesondere Silanverbindungen mit Acetonoxim-Gruppen, Silanverbindungen mit Methyl-Ethyl-Ketoxim-Gruppen, Silanverbindungen mit Methyl-Propyl-Ketoxim-Gruppen, Silanverbindungen mit Methyl-Isobutyl-Ketoxim-Gruppen und/oder Silanverbindungen mit Methyl-Isoprpyl-Ketoxim-Gruppen. Beispiele bevorzugter Acetatvernetzer umfassen Methyl-triacetoxysilan, Ethyl-triacetoxysilan, Propyl-triacetoxysilan, Vinyl-triacetoxysilan, Phenyl-triacetoxysilan, Tetraacetoxysilan, und dergleichen.

Die Acetatvernetzer können als Einzelverbindung eingesetzt werden, oder als Mischung aus zwei oder mehreren Acetatvernetzern.

Neben Mischungen, die nur aus Acetatvernetzern bestehen, können auch Vernetzermischungen verwendet werden, die zusätzlich Vernetzer auf Basis von Silanverbindungen mit hydrolisierbaren Alkoxygruppen umfassen. Vernetzer auf Basis von Silanverbindungen mit hydrolisierbaren Alkoxygruppen sind vergleichbar zu den Acetatvernetzern aufgebaut, wobei jede Acetoxygruppe durch eine Alkoxygruppe ersetzt ist. Alkoxyvernetzer geben bei Hydrolyse bzw. Polymerisation (Polykondensation) neutrale Alkoholmoleküle ab. Beispiele bevorzugter Alkoxygruppen sind Methoxy, Ethoxy, Propoxy, und dergleichen. Beispiele bevorzugter Alkoxyvernetzer umfassen Methyltrimethoxysilan, Ethyltrimethoxysilan, Propyltrimethoxysilan, Vinyltrimethoxysilan, Phenyltrimethoxysilan, Methyltriethoxysilan, Ethyltriethoxysilan, Propyltriethoxysilan, Vinyltriethoxysilan, Phenyltriethoxysilan, und dergleichen.

Beispiele bevorzugter Oximvernetzer umfassen Methyl-tris(acetonoximo)silan, Ethyl-tris(acetonoximo)silan, Propyl-tris(acetonoximo)silan, Vinyl-tris(acetonoximo)silan, Phenyl-tris(acetonoximo)silan, Tetra(acetonoximo)silan, Methyl-tris(methyl-ethyl-ketoximo)silan, Ethyl-tris(methyl-ethyl-ketoximo)silan, Propyl-tris(methyl-ethyl-ketoximo)silan, Vinyl-tris(methyl-ethyl-ketoximo)silan, Phenyl-tris(methyl-ethyl-ketoximo)silan, Tetra(methyl-ethyl-ketoximo)silan, Methyl-tris(methyl-propyl-ketoximo)silan, Ethyl-tris(methyl-propyl-ketoximo)silan, Propyl-tris(methyl-propyl-ketoximo)silan, Vinyl-tris(methyl-propyl-ketoximo)silan, Phenyl-tris(methyl-propyl-ketoximo)silan, Tetra(methyl-propyl-ketoximo)silan, Methyl-tris(methyl-isopropyl-ketoximo)silan, Ethyl-tris(methyl-isopropyl-ketoximo)silan, Propyl-tris(methyl-isopropyl-ketoximo)silan, Vinyl-tris(methyl-isopropyl-ketoximo)silan, Phenyl-tris(methyl-isopropyl-ketoximo)silan, Tetra(methyl-isopropyl-ketoximo)silan, Methyl-tris(methyl-isobutyl-ketoximo)silan, Ethyl-tris(methyl-isobutyl-ketoximo)silan, Propyl-tris(methyl-isobutyl-ketoximo)silan, Vinyl-tris(methyl-isobutyl-ketoximo)silan, Phenyl-tris(methyl-isobutyl-ketoximo)silan, Tetra(methyl-isobutyl-ketoximo)silan, und dergleichen.

Die Oximvernetzer können als Einzelverbindung eingesetzt werden, oder als Mischung aus zwei oder mehreren Oximvernetzern.

Es wurde gefunden, daß die Zusammensetzung unter Feuchtigkeitsausschluß über Zeitspannen von mehr als 12 Monaten aufbewahrt werden kann und unter dem Einfluß von Wasser oder Luftfeuchtigkeit bei Raumtemperatur polymerisiert.

Besonders bevorzugt umfasst eine erfindungsgemäße Zusammensetzung, die Acetatvernetzer umfasst, einen erfindungsgemäßen Katalysator, der Bismut-tris(2-ethylhexanoat) und Zink-bis(2-ethylhexanoat) umfasst. Besonders bevorzugt umfasst eine erfindungsgemäße Zusammensetzung, die Oximvernetzer umfasst, einen erfindungsgemäßen Katalysator, der Calcium-bis(2-ethylhexanoat) und Zink-bis(2-ethylhexanoat) umfasst.

In Gegenwart von Wasser oder Luftfeuchtigkeit polymerisieren bzw. kondensieren die Bestandteile Vernetzer (Härter) und Organosiliconverbindung der erfindungsgemäßen Zusammensetzung unter Ausbildung von Si-O-Si-Bindungen zu Siliconkautschukmassen. Die Polymerisationsprodukte, die unter Verwendung der erfindungsgemäßen Zusammensetzung hergestellt werden, sind stippenfrei, transparent und klar. Somit kann die erfindungsgemäße Zusammensetzung als Dichtungsmittel, Klebstoff, Beschichtungsmittel oder dergleichen verwendet werden.

Besonders bevorzugt umfasst die erfindungsgemäße Zusammensetzung 40 bis 90 Gew.-% der Organosiliconverbindung, 1 bis 15 Gew.-% des Vernetzers, und 0,1 bis 5,0 Gew.-% des erfindungsgemäßen Katalysators, weiter bevorzugt 0,5 bis 2,0 Gew.-% des Katalysators, wobei der Rest jeweils durch übliche Zusätze ausgemacht wird.

Falls gewünscht, kann die erfindungsgemäße Zusammensetzung weitere übliche Zusätze umfassen. Übliche Zusätze sind Füllstoffe, Farbmittel, Weichmacher, Thixotrophiermittel, Benetzungsmittel, Haftmittel, und andere.

Als Füllstoffe können sowohl verstärkende als auch nichtverstärkende Füllstoffe verwendet werden. Bevorzugt werden anorganische Füllstoffe verwendet, wie z.B. hochdisperse, pyrogene oder gefällte Kieselsäuren, Ruß, Quarzpulver, Kreide, oder Metallsalze oder Metalloxide, wie z.B. Titanoxide. Ein besonders bevorzugter Füllstoff ist eine hochdisperse Kieselsäure, wie sie beispielsweise unter dem Namen Cabosil 150 von Cabot erhältlich ist. Füllstoffe wie hochdisperse Kieselsäuren, insbesondere pyrogene Kieselsäuren, können auch als Thixotrophiermittel verwendet werden. Metalloxide können auch als Farbmittel verwendet werden, z.B. Titanoxide als weiße Farbmittel. Die Füllstoffe können auch durch üblichen Verfahren oberflächenmodifiziert werden, z.B. können mit Silanen hydrophobierte Kieselsäuren verwendet werden.

Als Weichmacher können an sich bekannte Polydiorganosiloxane ohne funktionelle Endgruppen, die sich somit von den erfindungsgemäß verwendeten Organosiliconverbindungen unterscheiden, und/oder flüssige aliphatische oder aromatische Kohlenwasserstoffe verwendet werden, vorzugsweise solche mit Molekulargewichten von etwa 50 bis etwa 5000, deren Flüchtigkeit gering ist und die mit Polysiloxanen hinreichend verträglich sind. Weichmacher haben bevorzugt eine kinematische Viskosität von 1 bis 5.000 cSt (bei 25°C), insbesondere von 50 bis 500 cSt, und besonders bevorzugt von 90 bis 200 cSt. Beispiele für Weichmacher umfassen Polydimethylsiloxane mit einer Viskosität von 90 bis 120 cSt., insbesondere von 100 cSt, Paraffinöle und polysubstituierte Alkylbenzole.

Als Benetzungs- und/oder Haftmittel (Haftvermittler) werden bevorzugt an sich bekannte Silanverbindungen mit reaktive Gruppen tragenden organischen Substituenten am Siliciumatom verwendet, die sich von den erfindungsgemäß verwendeten Organosiliconverbindungen unterscheiden, wie z.B. Organosilane mit reaktiven Amin-, Carbonsäure-, Epoxy- oder Thiolgruppen. Besonders bevorzugte Beispiele umfassen Aminosilane, wie Aminoethyl-aminopropyl-trialkoxysilane. Konkrete Beispiele besonders bevorzugter Haftmittel (Haftvermittler) sind 3-Aminopropyl-triethoxysilan, 3-Aminopropyl-trimethoxysilan, Aminoethylaminopropyl-trimethoxysilan, Butylaminopropyltriethoxysilan, Butylaminopropyl-trimethoxysilan, Propylaminopropyl-triethoxysilan, Propylaminopropyltrimethoxysilan, N-Cyclohexyl-3-aminopropyl-trimethoxysilan, N-Cyclohexyl-3-aminopropyl-triethoxysilan, und Co-Oligomere von Diamino/alkyl funktionellen Silanen, welches beispielsweise als Dynasylan 1146 von Degussa erhältlich ist. Auch andere oligomere Haftvermittler können verwendet werden.

In einem weiteren Aspekt stellt die vorliegende Erfindung eine Verwendung des erfindungsgemäßen Katalysators zum Vernetzen einer Siliconkautschukmasse bereit.

In einem weiteren Aspekt stellt die vorliegende Erfindung eine Verwendung der erfindungsgemäßen Zusammensetzung als Dichtungsmittel, Klebstoff, Beschichtungsmittel oder dergleichen bereit. Die Zusammensetzung wird bevorzugt im Bauwesen als Dichtungsmittel oder als Klebstoff eingesetzt, insbesondere für Fugen im Hoch- und Tiefbau, Glas- und Fensterbau (bevorzugt) und im Sanitärbereich. Weitere Verwendungen gibt es im Maschinenbau, z.B. in der Automobilindustrie (bevorzugt), der Elektroindustrie, der Textilindustrie oder beim Industrieanlagenbau.

### Beispiele

In den Beispielen und Vergleichsbeispielen werden folgende Metallsalze von Carbonsäuren verwendet, die von verschiedenen Herstellern erhältlich sind, wie beispielsweise der Fa. Gelest (Morrisville, USA).

### Als Bismutsalz von Carbonsäuren wird

Bismut-tris(2-ethylhexanoat) verwendet, das unter der CAS-Nr. 67874-71-9 klassifiziert ist.

### Als Calciumsalz von Carbonsäuren wird

Calcium-bis(2-ethylhexanoat) verwendet, das unter der CAS-Nr. 68409-80-3 klassifiziert ist.

Als Lithiumsalz von Carbonsäuren wird Lithium-2-ethylhexanoat verwendet, das unter der CAS-Nr. 15590-62-2 klassifiziert ist.

### Als Strontiumsalz von Carbonsäuren wird

Strontium-bis(2-ethylhexanoat) verwendet, das unter der CAS-Nr. 2457-02-5 klassifiziert ist.

Als Zinksalz von Carbonsäuren wird Zink-bis(2-ethylhexanoat) verwendet, das unter der CAS-Nr. 85203-81-2 klassifiziert ist.

Die weiteren Chemikalien, die in den Beispielen und Vergleichsbeispielen verwendet werden, sind beispielsweise von den im folgenden genannten Herstellern erhältlich:
Polydimethylsiloxan (80000 cSt) von der Fa. Wacker Chemie, Burghausen, Deutschland;
Polymethylsiloxan (100 cSt) von der Fa. Dow Corning, Seneffe, Belgien;
Füllstoff (hochdisperse Kieselsäure) von der Fa. Cabot Rheinfelden, Deutschland;
Aminopropyltriethoxysilan von der Fa. Nitrochemie Aschau GmbH, Deutschland;
Haftvermittler (Co-Oligomeres auf Basis von
Aminoethylaminopropyltrimethoxysilan) von der Fa. Nitrochemie Aschau GmbH, Deutschland;
Haftvermittler (Diacetoxy-di-tert.-butoxysilan) von der Fa. Nitrochemie Aschau GmbH, Deutschland;
Vernetzermischungen von der Fa. Nitrochemie Aschau GmbH, Deutschland.

### Messung der Produkteigenschaften der hergestellten Dichtstoffe

Die Produkteigenschaften Hautbildungszeit, Klebfreizeit, Frühbeanspruchung, vollständige Aushärtung, Aussehen und Shore-Härte A wurden für alle hergestellten Dichtstoffe nach üblichen Verfahren bestimmt (s. z.B. "Praxishandbuch Dichtstoffe" vom Industrieverband Dichtstoffe e.V., 3. Auflage 1990). Alle Messungen wurden bei Bedingungen von 23°C und 50% Luftfeuchtigkeit durchgeführt.

Zur Bestimmung der Hautbildungszeit wurde die Zeit gemessen, zu der an der Oberfläche eines Probenstranges eine vollständige Schicht aus verfestigtem Material (Haut) beobachtet wurde.

Zur Bestimmung der Klebfreizeit wurde die Zeit gemessen, zu der die Oberfläche eines Probenstranges keine Klebrigkeit mehr aufweist.

Zur Bestimmung der Frühbeanspruchung wurde ein Siliconstreifen von 10 mm Höhe auf einen Blechstreifen ausgebracht. Die Belastbarkeit wird durch ein Abknicken des Streifens um 90° getestet. Angegeben wird die Zeit, bei der die Haut des Siliconstreifens nicht reißt.

Zur Bestimmung der vollständigen Aushärtung wird der Dichtstoff mit 4 mm Höhe auf eine Glasplatte aufgetragen und die Zeitdauer der Durchhärtung bis zur Glasplatte gemessen.

Zur Bestimmung der Oberflächenvernetzung (Kerbfestigkeit) wird ein Dichtstoffstreifen von 10 mm Höhe auf eine Glasplatte aufgetragen. Nach 24 Stunden bei Normbedingungen (21 bis 25°C; 40 bis 60% Luftfeutigkeit) wird eine Kerbe in die Oberfläche eingedrückt. Nach 10 Sekunden wird geprüft, ob die Einkerbung reversibel ist.

Das Aussehen wurde durch organoleptische Prüfung bestimmt.

Die Shore-Härte A wurde mit einem Zwick-Roell-Messgerät (Bez.: ASTM D 2240; DIN 53505; ISO 868) bestimmt.

### Beispiel 1:

### Katalysator A

Es wird ein erfindungsgemäßer Katalysator hergestellt, der Calcium- und Zinksalze von Carbonsäuren umfasst.

Für Katalysator A werden Calcium-bis(2-ethylhexanoat) und Zink-bis(2-ethylhexanoat) im Verhältnis 4:5 gemischt (Gewichtsverhältnis).

### Beispiel 2:

### Katalysator B

Es wird ein erfindungsgemäßer Katalysator hergestellt, der Bismut- und Zinksalze von Carbonsäuren umfasst.

Für Katalysator B werden Bismut-tris(2-ethylhexanoat) und Zink-bis(2-ethylhexanoat) im Verhältnis 7:3 gemischt (Gewichtsverhältnis).

### Referenzbeispiel 1:

Es wird eine übliche Zinn-haltige Siliconkautschukmischung gemäß folgender Formulierung hergestellt:

| | | |
|---|---|---|
| 556,0 g | α,ω-dihydroxyl-terminiertes Polydimethylsiloxan mit einer Viskosität von 80.000 cSt | |
| 266,0 g | Polydimethylsiloxan mit Viskosität 100 cSt | |
| 109,0 g | Hochdisperse Kieselsäure (Füllstoff) | |
| 50,5 g | Vernetzermischung aus | |
| | 14,5 g | Vinyl-tris(ethylmethylketoximo)silan und |
| | 36,0 g | Methyl-tris(ethylmethylketoximo)silan |
| 18,0 g | 3-Aminopropyltriethoxysilan (Thixotropiermittel) | |
| 4,0 g | Dibutylzinnlaureat als Katalysator | |

Der Dichtstoff hat nach Ausbringung an Luft:
- eine Hautbildungszeit von 10 min
- eine Klebfreizeit von 30 min
- eine Frühbeanspruchung nach 80 min
- eine vollständige Aushärtung nach 24 h (Kerbfestigkeit)
- ein transparentes Aussehen
- eine Shore-Härte A von 24

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Referenzbeispiel 1 illustriert die Produkteigenschaften einer derzeitig üblichen Zinn-haltigen Dichtstoffmischung.

### Vergleichsbeispiel 1:

### Dichtstoffrezeptur 1 (mit Oximvernetzer)

Es wird eine Siliconkautschukmischung gemäß folgender Formulierung hergestellt:

| | | |
|---|---|---|
| 525,0 g | α,ω-dihydroxyl-terminiertes Polydimethylsiloxan mit einer Viskosität von 80.000 cSt | |
| 313,0 g | Polydimethylsiloxan mit Viskosität 100 cSt | |
| 103,0 g | Hochdisperse Kieselsäure (Füllstoff) | |
| 42,0 g | Vernetzermischung aus | |
| | 21,0 g | Ethyl-tris(acetonoximo)silan, |
| | 15,0 g | Vinyl-tris(ethylmethylketoximo)silan und |
| | 6,0 g | Methyl-tris(ethylmethylketoximo)silan |
| 13,0 g | Haftvermittler (auf Basis von Aminoethylaminopropyltrimethoxysilan) | |
| 3,0 g | Zink-bis(2-ethylhexanoat) | |
| 1,0 g | 2-Ethylhexansäure (Co-Katalysator) | |

Der Dichtstoff hat nach Ausbringung an Luft:
- eine Hautbildungszeit von 7 min
- eine Klebfreizeit von 20 min
- eine Frühbeanspruchung nach 160 min
- eine vollständige Aushärtung nach 24 h (Kerbfestigkeit)
- ein transparentes Aussehen
- eine Shore-Härte A von 22

Weiterhin wurde gefunden, dass der Dichtstoff eine gute Haftung auf Holz, lasiertem Holz, Aluminium und Glas aufweist. Dagegen ist die Haftung auf pulverbeschichtetem Aluminium, PVC, Polyamid, Stahl und Beton nur mäßig bis schlecht.

Der Dichtstoff weist ferner eine ungenügende Lagerstabilität in der Kartusche auf.

Bereits nach 4 Wochen Lagerung bei 60°C in der Kartusche erreicht der Dichtstoff nach 7 Tagen Aushärtung an der Luft nur noch eine Shore-Härte A von 12. Außerdem zeigt der Dichtstoff nur noch eine mäßige bis schlechte Haftung auf allen Substraten.

### Vergleichsbeispiel 2:

### Dichtstoffrezeptur 1 (mit Oximvernetzer)

Es wird eine Siliconkautschukmischung gemäß folgender Formulierung hergestellt:

| | | |
|---|---|---|
| 525,0 g | α,ω-dihydroxyl-terminiertes Polydimethylsiloxan mit einer Viskosität von 80.000 cSt | |
| 313,0 g | Polydimethylsiloxan mit Viskosität 100 cSt | |
| 103,0 g | Hochdisperse Kieselsäure (Füllstoff) | |
| 42,0 g | Vernetzermischung aus | |
| | 21,0 g | Ethyl-tris(acetonoximo)silan, |
| | 15,0 g | Vinyl-tris(ethylmethylketoximo)silan und |
| | 6,0 g | Methyl-tris(ethylmethylketoximo)silan |
| 13,0 g | Haftvermittler (auf Basis von Aminoethylaminopropyltrimethoxysilan) | |
| 2,9 g | Zink-bis(2-ethylhexanoat) | |
| 1,1 g | | Octylphosphonsäure (Co-Katalysator) |

Der Dichtstoff hat nach Ausbringung an Luft:
- eine Hautbildungszeit von 10 min
- eine Klebfreizeit von 25 min
- eine Frühbeanspruchung nach 250 min (nicht akzeptabel)
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, etc. aufweist.

Der Dichtstoff weist jedoch eine ungenügende Lagerstabilität in der Kartusche auf.

Bereits nach 4 Wochen Lagerung bei 60°C in der Kartusche haben sich die folgenden Parameter verschlechtert:
- keine Kerbfestigkeit nach 24 h an Luft
- Shore-Härte A nach 7 Tagen an der Luft nur noch 16
- Vergilbung des Dichtstoffs

### Vergleichsbeispiel 3:

### Dichtstoffrezeptur 1 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| | 21,0 g Ethyl-tris(acetonoximo)silan, |
| | 15,0 g Vinyl-tris(ethylmethylketoximo)silan und |
| | 6,0 g Methyl-tris(ethylmethylketoximo)silan |
| 13,0 g | Haftvermittler (auf Basis von Aminoethylaminopropyltrimethoxysilan) |
| 2,9 g | Strontium-bis(2-ethylhexanoat) |
| 1,1 g | Octylphosphonsäure (Co-Katalysator) |

Der Dichtstoff hat nach Ausbringung an Luft:
- eine Hautbildungszeit von 13 min
- eine Klebfreizeit von 30 min
- eine Frühbeanspruchung nach 360 min (nicht akzeptabel)
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, etc. aufweist.

Der Dichtstoff weist jedoch eine ungenügende Lagerstabilität in der Kartusche auf.
Bereits nach 4 Wochen Lagerung bei 60°C in der Kartusche haben sich die folgenden Parameter verschlechtert:
- keine Kerbfestigkeit nach 24 h an Luft
- Shore-Härte A nach 7 Tagen an der Luft nur noch 17
- Vergilbung des Dichtstoffs

### Vergleichsbeispiel 4:

### Dichtstoffrezeptur 1 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| | 21,0 g Ethyl-tris(acetonoximo)silan, |
| | 15,0 g Vinyl-tris(ethylmethylketoximo)silan und |
| | 6,0 g Methyl-tris(ethylmethylketoximo)silan |
| 13,0 g | Haftvermittler (auf Basis von Aminoethylaminopropyltrimethoxysilan) |
| 2,9 g | Lithium-2-ethylhexanoat |
| 1,1 g | Octylphosphonsäure (Co-Katalysator) |

Der Dichtstoff hat nach Ausbringung an Luft:
- eine Hautbildungszeit von 13 min
- eine Klebfreizeit von 30 min
- eine Frühbeanspruchung nach 420 min (nicht akzeptabel)
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, etc. aufweist.

Der Dichtstoff weist jedoch eine ungenügende Lagerstabilität in der Kartusche auf.

Bereits nach 4 Wochen Lagerung bei 60°C in der Kartusche haben sich die folgenden Parameter verschlechtert:
- keine Kerbfestigkeit nach 24 h an Luft
- Shore-Härte A nach 7 Tagen an der Luft nur noch 15
- Vergilbung des Dichtstoffs

### Vergleichsbeispiel 5:

### Dichtstoffrezeptur 1 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| | 21,0 g Ethyl-tris(acetonoximo)silan, |
| | 15,0 g Vinyl-tris(ethylmethylketoximo)silan und |
| | 6,0 g Methyl-tris(ethylmethylketoximo)silan |
| 13,0 g | Haftvermittler (auf Basis von Aminoethylaminopropyltrimethoxysilan) |
| 4,0 g | Zink-bis(2-ethylhexanoat) |

Der Dichtstoff hat nach Ausbringung an Luft:
- eine Hautbildungszeit von 5 min
- eine Klebfreizeit von 25 min
- eine Frühbeanspruchung nach 280 min (nicht akzeptabel)
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, etc. aufweist.

Der Dichtstoff weist jedoch eine ungenügende Lagerstabilität in der Kartusche auf.
Bereits nach 4 Wochen Lagerung bei 60°C in der Kartusche haben sich die folgenden Parameter verschlechtert:
- keine Kerbfestigkeit nach 24 h an Luft
- Shore-Härte A nach 7 Tagen an der Luft nur noch 17
- Vergilbung des Dichtstoffs

### Vergleichsbeispiel 6:

### Dichtstoffrezeptur 1 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| | 21,0 g Ethyl-tris(acetonoximo)silan, |
| | 15,0 g Vinyl-tris(ethylmethylketoximo)silan und |
| | 6,0 g Methyl-tris(ethylmethylketoximo)silan |
| 13,0 g | Haftvermittler (auf Basis von Aminoethylaminopropyltrimethoxysilan) |
| 4,0 g | Bismut-tris(2-ethylhexanoat) |

Der Dichtstoff hat nach Ausbringung an Luft:
- eine Hautbildungszeit von 5 min
- eine Klebfreizeit von 15 min
- eine Frühbeanspruchung nach 300 min (nicht akzeptabel)
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, etc. aufweist.

Der Dichtstoff weist jedoch eine ungenügende Lagerstabilität in der Kartusche auf.
Bereits nach 4 Wochen Lagerung bei 60°C in der Kartusche haben sich die folgenden Parameter verschlechtert:
- keine Kerbfestigkeit nach 24 h an Luft
- Shore-Härte A nach 7 Tagen an der Luft nur noch 15
- Vergilbung des Dichtstoffs

### Vergleichsbeispiel 7:

### Dichtstoffrezeptur 1 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus 21,0 g Ethyl-tris(acetonoximo)silan, |
| | 15,0 g Vinyl-tris(ethylmethylketoximo)silan und |
| | 6,0 g Methyl-tris(ethylmethylketoximo)silan |
| 13,0 g | Haftvermittler (auf Basis von Aminoethylaminopropyltrimethoxysilan) |
| 4,0 g | Calcium-bis(2-ethylhexanoat) |

Der Dichtstoff hat nach Ausbringung an Luft:
- eine Hautbildungszeit von 5 min
- eine Klebfreizeit von 18 min
- eine Frühbeanspruchung nach 320 min (nicht akzeptabel)
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, etc. aufweist.

Der Dichtstoff weist jedoch eine ungenügende Lagerstabilität in der Kartusche auf.
Bereits nach 4 Wochen Lagerung bei 60°C in der Kartusche haben sich die folgenden Parameter verschlechtert:
- keine Kerbfestigkeit nach 24 h an Luft
- Shore-Härte A nach 7 Tagen an der Luft nur noch 14
- Vergilbung des Dichtstoffs

Aus den Vergleichsbeispielen 1 bis 7 ist ersichtlich, dass es nicht möglich ist, mit den bekannten Zinn-freien Katalysatoren eine Dichtstoffmasse mit Oximvernetzern herzustellen, die gute Produkteigenschaften aufweist, die mit denen einer üblichen Zinn-haltigen Dichtstoffmasse (z.B. Referenzbeispiel 1) vergleichbar wären. Insbesondere weisen die mit den bekannten Zinn-freien Katalysatoren hergestellten Dichtstoffmassen eine schlechte Haftung auf vielen Materialien sowie eine ungenügende Lagerstabilität auf.

### Beispiel 3:

### Dichtstoffrezeptur 1 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| | 21,0 g Ethyl-tris(ethylmethylketoximo)silan, |
| | 15,0 g Vinyl-tris(ethylmethylketoximo)silan und |
| | 6,0 g Methyl-tris(ethylmethylketoximo)silan |
| 13,0 g | Haftvermittler (auf Basis von Aminoethylaminopropyltrimethoxysilan) |
| 2,0 g | Katalysator A (aus Beispiel 1) |

Der Dichtstoff hat nach Ausbringung an Luft:
- eine Hautbildungszeit von 12 min
- eine Klebfreizeit von 23 min
- eine Frühbeanspruchung nach 180 min
- eine vollständige Aushärtung nach 24 h (Kerbfestigkeit)
- ein transparentes Aussehen
- eine Shore-Härte A von 25

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Ferner zeichnet sich der Dichtstoff durch seine ausgezeichnete Lagerstabilität in der Kartusche aus. Nach 4 Wochen Lagerung bei 60°C in der Kartusche weist der Dichtstoff noch die gleichen Eigenschaften auf, wie bei der ersten Ausbringung.

### Beispiel 4:

### Dichtstoffrezeptur 2 (mit Oximvernetzer)

Es wird eine Siliconkautschukmischung gemäß folgender Formulierung hergestellt:

| | |
|---|---|
| 525,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 103,0 g | Hochdisperse Kieselsäure (Füllstoff) |
| 42,0 g | Vernetzermischung aus |
| | 21,0 g vinyl-tris(ethylmethylketoximo)silan und |
| | 21,0 g Methyl-tris(ethylmethylketoximo)silan |
| 13,0 g | Haftvermittler (auf Basis von Aminoethylaminopropyltrimethoxysilan) |
| 2,0 g | Katalysator A (aus Beispiel 1) |

Der Dichtstoff hat nach Ausbringung an Luft:
- eine Hautbildungszeit von 10 min
- eine Klebfreizeit von 20 min
- eine Frühbeanspruchung nach 140 min
- eine vollständige Aushärtung nach 24 h (Kerbfestigkeit)
- ein transparentes Aussehen
- eine Shore-Härte A von 26

Die Eigenschaften Hautbildungszeit, Klebfreizeit, Frühbeanspruchung, vollständige Aushärtung, Aussehen und Shore-Härte A wurden wie in Referenzbeispiel 1 beschrieben nach üblichen Verfahren bestimmt.

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Ferner zeichnet sich der Dichtstoff durch seine ausgezeichnete Lagerstabilität in der Kartusche aus. Nach 4 Wochen Lagerung bei 60°C in der Kartusche weist der Dichtstoff noch die gleichen Eigenschaften auf, wie bei der ersten Ausbringung.

Im Gegensatz zu den in den Vergleichsbeispielen 1 bis 7 hergestellten Dichtstoffen zeichnen sich die mit den erfindungsgemäßen Katalysator A hergestellten Dichtstoffe mit Oximvernetzern, unabhängig von den in den Dichtstoffrezepturen 1 und 2 verwendeten Vernetzern, nicht nur durch ausgezeichnete Produkteigenschaften, sondern auch durch eine ausgezeichnete Lagerstabilität aus. Auch wird ein zusätzlicher Co-Katalysator nicht benötigt.

### Vergleichsbeispiel 8:

### Dichtstoffrezeptur 3 (mit Acetatvernetzer)

Es wird eine Siliconkautschukmischung gemäß folgender Formulierung hergestellt:

| | |
|---|---|
| 562,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 79,0 g | Hochdisperse Kieselsäure (Füllstoff) |
| 40,0 g | Vernetzermischung aus |
| | 28,0 g Propyl-triacetoxysilan und |
| | 12,0 g Ethyl-triacetoxysilan |
| 5,0 g | Haftvermittler (Diacetoxy-di-tert.-butoxysilan) |
| 2,9 g | Zink-bis(2-ethylhexanoat) |
| 1,1 g | Octylphosphonsäure (Co-Katalysator) |

Der Dichtstoff hat nach Ausbringung an Luft:
- eine Hautbildungszeit von 11 min
- eine Klebfreizeit von 75 min
- eine Frühbeanspruchung nach 30 min
- eine vollständige Aushärtung nach 24 h (Kerbfestigkeit)
- ein transparentes Aussehen
- eine Shore-Härte A von 23

Weiterhin wurde gefunden, dass der Dichtstoff eine gute Haftung auf Holz, lackiertem Holz, lasiertem Holz, Aluminium, Glas, Polyamid, Stahl, etc. aufweist.

Der Dichtstoff weist jedoch eine ungenügende Lagerstabilität in der Kartusche auf.
Bereits nach 8 Wochen Lagerung bei Raumtemperatur in der Kartusche haben sich die folgenden Parameter verschlechtert:
- Klebefreizeit: 420 min
- keine Kerbfestigkeit nach 24 h an Luft
- eine Frühbeanspruchung nach 90 min

### Vergleichsbeispiel 9:

### Dichtstoffrezeptur 3 (mit Acetatvernetzer)

Es wird eine Siliconkautschukmischung gemäß folgender Formulierung hergestellt:

| | |
|---|---|
| 562,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 79,0 g | Hochdisperse Kieselsäure (Füllstoff) |
| 40,0 g | Vernetzermischung aus |
| | 28,0 g Propyl-triacetoxysilan und |
| | 12,0 g Ethyl-triacetoxysilan |
| 5,0 g | Haftvermittler (Diacetoxy-di-tert.-butoxysilan) |
| 4,0 g | Zink-bis(2-ethylhexanoat) |

Der Dichtstoff hat nach Ausbringung an Luft:
- eine Hautbildungszeit von 11 min
- eine Klebfreizeit von mehr als fünf Stunden
- eine Frühbeanspruchung nach mehr als fünf Stunden
- keine vollständige Aushärtung nach 24 h (Kerbfestigkeit)
- ein transparentes Aussehen
- eine Shore-Härte A von 22

Weiterhin wurde gefunden, dass der Dichtstoff eine gute Haftung auf Aluminium, Glas, Polyamid, Stahl, etc. aufweist.
Dagegen ist die Haftung auf Holz, lackiertem Holz und lasiertem Holz nur schlecht.

Der Dichtstoff weist ferner eine ungenügende Lagerstabilität in der Kartusche auf.
Bereits nach 4 Wochen Lagerung bei 60°C in der Kartusche haben sich die folgenden Parameter verschlechtert:
- Klebefreizeit: mehr als 48 Stunden
- keine Kerbfestigkeit nach 48 h an Luft
- eine Frühbeanspruchung nach mehr als 48 h
- Shore-Härte A nach 7 Tagen an Luft nur noch 15

### Vergleichsbeispiel 10:

### Dichtstoffrezeptur 3 (mit Acetatvernetzer)

Es wird eine Siliconkautschukmischung gemäß folgender Formulierung hergestellt:

| | |
|---|---|
| 562,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 79,0 g | Hochdisperse Kieselsäure (Füllstoff) |
| 40,0 g | Vernetzermischung aus |
| | 28,0 g Propyl-triacetoxysilan und |
| | 12,0 g Ethyl-triacetoxysilan |
| 5,0 g | Haftvermittler (Diacetoxy-di-tert.-butoxysilan) |
| 4,0 g | Bismut-tris(2-ethylhexanoat) |

Der Dichtstoff hat nach Ausbringung an Luft:
- eine Hautbildungszeit von 7 min
- eine Klebfreizeit von mehr als 5 Stunden
- eine Frühbeanspruchung nach mehr als 5 Stunden
- keine vollständige Aushärtung nach 24 h (Kerbfestigkeit)
- ein transparentes Aussehen
- eine Shore-Härte A von 21

Weiterhin wurde gefunden, dass der Dichtstoff eine gute Haftung auf Aluminium, Glas, Polyamid, Stahl, etc. aufweist.

Dagegen ist die Haftung auf Holz, lackiertem Holz und lasiertem Holz nur schlecht.

Der Dichtstoff weist ferner eine ungenügende Lagerstabilität in der Kartusche auf.
Bereits nach 4 Wochen Lagerung bei 60°C in der Kartusche haben sich die folgenden Parameter verschlechtert:
- Klebefreizeit: mehr als 48 Stunden
- keine Kerbfestigkeit nach 48 h an Luft
- eine Frühbeanspruchung nach mehr als 48 h
- Shore-Härte A nach 7 Tagen an Luft nur noch 14

### Vergleichsbeispiel 11:

### Dichtstoffrezeptur 3 (mit Acetatvernetzer)

Es wird eine Siliconkautschukmischung gemäß folgender Formulierung hergestellt:

| | |
|---|---|
| 562,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 79,0 g | Hochdisperse Kieselsäure (Füllstoff) |
| 40,0 g | Vernetzermischung aus |
| | 28,0 g Propyl-triacetoxysilan und |
| | 12,0 g Ethyl-triacetoxysilan |
| 5,0 g | Haftvermittler (Diacetoxy-di-tert.-butoxysilan) |
| 4,0 g | Calcium-bis(2-ethylhexanoat) |

Der Dichtstoff hat nach Ausbringung an Luft:
- eine Hautbildungszeit von 9 min
- eine Klebfreizeit von mehr als 5 Stunden
- eine Frühbeanspruchung nach mehr als 5 Stunden
- keine vollständige Aushärtung nach 24 h (Kerbfestigkeit)
- ein transparentes Aussehen
- eine Shore-Härte A von 23

Weiterhin wurde gefunden, dass der Dichtstoff eine gute Haftung auf Aluminium, Glas, Polyamid, Stahl, etc. aufweist.
Dagegen ist die Haftung auf Holz, lackiertem Holz und lasiertem Holz nur schlecht.

Der Dichtstoff weist ferner eine ungenügende Lagerstabilität in der Kartusche auf.
Bereits nach 4 Wochen Lagerung bei 60°C in der Kartusche haben sich die folgenden Parameter verschlechtert:
- Klebefreizeit: mehr als 48 Stunden
- keine Kerbfestigkeit nach 48 h an Luft
- eine Frühbeanspruchung nach mehr als 48 h
- Shore-Härte A nach 7 Tagen an Luft nur noch 12

Aus den Vergleichsbeispielen 8 bis 11 ist ersichtlich, dass es nicht möglich ist, mit den bekannten Zinn-freien Katalysatoren eine Dichtstoffmasse mit Acetatvernetzern herzustellen, die gute Produkteigenschaften aufweist, die mit denen einer üblichen Zinn-haltigen Dichtstoffmasse (z.B. Referenzbeispiel 1) vergleichbar wären. Insbesondere weisen die mit den bekannten Zinn-freien Katalysatoren hergestellten Dichtstoffmassen eine schlechte Haftung auf vielen Materialien sowie eine mangelhafte Durchhärtung auf. Darüber hinaus zeigen diese Dichtstoffe eine ungenügende Lagerstabilität.

### Beispiel 5:

### Dichtstoffrezeptur 3 (mit Acetatvernetzer)

Es wird eine Siliconkautschukmischung gemäß folgender Formulierung hergestellt:

| | |
|---|---|
| 562,0 g | α,ω-dihydroxyl-terminiertes Polydimethylsiloxan mit einer Viskosität von 80.000 cSt |
| 313,0 g | Polydimethylsiloxan mit Viskosität 100 cSt |
| 79,0 g | Hochdisperse Kieselsäure (Füllstoff) |
| 40,0 g | Vernetzermischung aus |
| | 28,0 g Propyl-triacetoxysilan und |
| | 12,0 g Methyl-triacetoxysilan |
| 5,0 g | Haftvermittler (Diacetoxy-di-tert.-butoxysilan) |
| 4,0 g | Katalysator B (aus Beispiel 2) |

Der Dichtstoff hat nach Ausbringung an Luft:
- eine Hautbildungszeit von 12 min
- eine Klebfreizeit von 25 min
- eine Frühbeanspruchung nach 40 min
- eine vollständige Aushärtung nach 24 h (Kerbfestigkeit)
- ein transparentes Aussehen
- eine Shore-Härte A von 15

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Ferner zeichnet sich der Dichtstoff durch seine ausgezeichnete Lagerstabilität in der Kartusche aus. Nach 8 Wochen Lagerung bei 60°C in der Kartusche weist der Dichtstoff noch die gleichen Eigenschaften auf, wie bei der ersten Ausbringung.

### Beispiel 6:

### Dichtstoffrezeptur 4 (mit Acetat- und Alkoxyvernetzer)

Es wird eine Siliconkautschukmischung gemäß folgender Formulierung hergestellt:

| | | |
|---|---|---|
| 555,0 g | α,ω-dihydroxyl-terminiertes Polydimethylsiloxan mit einer Viskosität von 80.000 cSt | |
| 312,0 g | Polydimethylsiloxan mit Viskosität 100 cSt | |
| 84,0 g | Hochdisperse Kieselsäure (Füllstoff) | |
| 45,0 g | Vernetzermischung aus | |
| | 31,5 g | Methyl-triacetoxysilan, |
| | 9,0 g | Propyl-triacetoxysilan und |
| | 4,5 g | Methyl-trimethoxysilan |
| 2,5 g | Haftvermittler (Diacetoxy-di-tert.-butoxysilan) | |
| 4,0 g | Katalysator B (aus Beispiel 2) | |

Der Dichtstoff hat nach Ausbringung an Luft:
- eine Hautbildungszeit von 15 min
- eine Klebfreizeit von 27 min
- eine Frühbeanspruchung nach 40 min
- eine vollständige Aushärtung nach 24 h (Kerbfestigkeit)
- ein transparentes Aussehen
- eine Shore-Härte A von 20

Weiterhin wurde gefunden, dass der Dichtstoff eine gute Haftung auf Holz, lackiertem Holz, lasiertem Holz, Aluminium, pulverbeschichtetem Aluminium, Glas, PVC, Polyamid, Stahl, Beton, und vielen anderen Materialien aufweist.

Ferner zeichnet sich der Dichtstoff durch seine ausgezeichnete Lagerstabilität in der Kartusche aus. Nach 8 Wochen Lagerung bei 60°C in der Kartusche weist der Dichtstoff noch die gleichen Eigenschaften auf, wie bei der ersten Ausbringung.

Im Gegensatz zu den in den Vergleichsbeispielen 1 bis 7 hergestellten Dichtstoffen zeichnen sich die mit den erfindungsgemäßen Katalysatoren A und B hergestellten Dichtstoffe mit Oximvernetzern durch ausgezeichnete Produkteigenschaften und eine ausgezeichnete Lagerstabilität aus.

Im Gegensatz zu den in den Vergleichsbeispielen 8 bis 11 hergestellten Dichtstoffen zeichnen sich die mit den erfindungsgemäßen Katalysator B hergestellten Dichtstoffe mit Acetatvernetzern bzw. Acetat- und Alkoholatvernetzern, unabhängig von den in den Dichtstoffrezepturen 3 und 4 verwendeten Vernetzern, nicht nur durch ausgezeichnete Produkteigenschaften, sondern auch durch eine ausgezeichnete Lagerstabilität aus.

Auch wird ein zusätzlicher Co-Katalysator nicht benötigt.

## Patentansprüche

1. Katalysator für die Vernetzung von Siliconkautschukmassen, wobei der Katalysator mindestens zwei voneinander verschiedene Verbindungen umfasst, die unabhängig voneinander aus Metallsalzen von Carbonsäuren ausgewählt werden.

2. Katalysator nach Anspruch 1, **dadurch gekennzeichnet, dass** ein Metallsalz einer Carbonsäuren mindestens ein Metallkation umfasst, das aus einem Kation von Bismut, einem Kation von Calcium, einem Kation von Kalium, einem Kation von Lithium, einem Kation von Magnesium, einem Kation von Natrium und einem Kation von Zink ausgewählt wird.

3. Katalysator nach einem der Ansprüche 1 oder 2, **dadurch gekennzeichnet, dass** ein Metallsalz einer Carbonsäure ein oder mehrere Carbonsäureanionen umfasst, die aus Anionen von gesättigten und ungesättigten Carbonsäuren mit sechs bis neunzehn Kohlenstoffatomen ausgewählt werden, wobei die Carbonsäure eine geradkettige oder verzweigte Kohlenwasserstoffkette umfasst.

4. Katalysator nach einem der vorherigen Ansprüche, **dadurch gekennzeichnet, dass** der Katalysator ein Metallsalz einer Carbonsäure, das ein Zinksalz einer oder mehrerer verzweigten gesättigten Carbonsäuren mit sechs bis neunzehn Kohlenstoffatomen ist, und ein Metallsalz einer Carbonsäure, das aus einem Bismutsalz, einem Calciumsalz, einem Kaliumsalz, einem Lithiumsalz, einem Magnesiumsalz und einem Natriumsalz jeweils einer oder mehrerer verzweigten gesättigten Carbonsäuren mit sechs bis neunzehn Kohlenstoffatomen ausgewählt wird, umfasst.

5. Katalysator nach einem der vorherigen Ansprüche, **dadurch gekennzeichnet, dass** er Zink-bis(2-ethylhexanoat) umfasst.

6. Katalysator nach einem der vorherigen Ansprüche, **dadurch gekennzeichnet, dass** er Bismut-tris(2-ethylhexanoat) umfasst.

7. Katalysator nach einem der vorherigen Ansprüche, **dadurch gekennzeichnet, dass** er Calcium-bis(2-ethylhexanoat) umfasst.

8. Katalysator nach einem der vorherigen Ansprüche, **dadurch gekennzeichnet, dass** er Calcium-bis(2-ethylhexanoat) und Zink-bis(2-ethylhexanoat) umfasst, vorzugsweise in einem Verhältnis von 1:1 bis 1:3 umfasst.

9. Katalysator nach einem der Ansprüche 1 bis 7, **dadurch gekennzeichnet, dass** er Bismut-tris(2-ethylhexanoat) und Zink-bis(2-ethylhexanoat) umfasst, vorzugsweise in einem Verhältnis von 1:1 bis 4:1 umfasst.

10. Zusammensetzung, die den Katalysator nach einem der vorherigen Ansprüche, mindestens eine Organosiliconverbindung und mindestens einen Vernetzer umfasst.

11. Zusammensetzung nach Anspruch 10, **dadurch gekennzeichnet, dass** die Organosiliconverbindung eine α,ω-dihydroxyl-terminierte Polyorganosiloxanverbindung ist, insbesondere ein α,ω-dihydroxyl-terminiertes Polydialkylsiloxan.

12. Zusammensetzung nach Anspruch 10 oder 11, **dadurch gekennzeichnet, dass** der Vernetzer mindestens eine Verbindung umfasst, die aus der Gruppe ausgewählt wird, die aus Silanverbindungen, die Säurereste umfassen, insbesondere Silanverbindungen mit Acetatresten, und Silanverbindungen, die Oximreste umfassen, insbesondere Silanverbindungen mit Acetonoxim-Gruppen, Silanverbindungen mit Methyl-Ethyl-Ketoxim-Gruppen, Silanverbindungen mit Methyl-Propyl-Ketoxim-Gruppen, Silanverbindungen mit Methyl-Isobutyl-Ketoxim-Gruppen und/oder Silanverbindungen mit Methyl-Isopropyl-Ketoxim-Gruppen, besteht.

13. Zusammensetzung nach Anspruch 12, **dadurch gekennzeichnet, dass** der Vernetzer mindestens eine Silanverbindung mit Acetatresten und eine Silanverbindung mit Akoxyresten umfasst.

14. Zusammensetzung nach einen der Ansprüche 10 bis 13, **dadurch gekennzeichnet, dass** sie 40 bis 90 Gew.-% der Organosiliconverbindung, 1 bis 15 Gew.-% des Vernetzers, und 0,1 bis 5,0 Gew.-% des Katalysators nach einem der Ansprüche 1 bis 10 umfasst.

15. Verwendung eines Katalysators nach einem der Ansprüche 1 bis 9 zum Vernetzen einer Siliconkautschukmasse.

16. Verwendung einer Zusammensetzung nach einem der Ansprüche 10 bis 14 als Dichtungsmittel, Klebstoff oder Beschichtungsmittel.
